# EUROPÄISCHE PATENTANMELDUNG

(11) **EP 3 456 451 A1**
(43) Veröffentlichungstag der Anmeldung: **20.03.2019**
(21) Anmeldenummer: 17190932.8
(22) Anmeldetag: 13.09.2017
(51) Int. Cl.: B23D 25/12, B23D 35/00, B23D 36/00

(54) **VORRICHTUNG UND VERFAHREN ZUM QUERTEILEN EINES WARMBANDS**

(71) Anmelder: Primetals Technologies Austria GmbH, 4031 Linz (AT)
(72) Erfinder: Scholler, Juergen, 3300 Amstetten (AT); Viehboeck, Andreas, 4100 Ottensheim (AT); Winkler, Roman, 4203 Altenberg (AT)
(74) Vertreter: Metals@Linz

(57) **Zusammenfassung**

Verfahren und Vorrichtung zum Querteilen eines Warmbands, umfassend eine Bestimmung einer Dicke (2) des Warmbands (1) mit einer Dickenbestimmungsvorrichtung, Auswählen einer ersten Trommelschere (4) für ein dickes Warmband oder einer zweiten Trommelschere (5) für ein dünnes Warmband aufgrund der Dicke des Warm-bands, wobei für dickes Warmband mit einer Banddicke von 4 mm bis 28 mm und einer Bandlaufgeschwindigkeit kleiner als 2,25 m/s die erste Trommelschere (4) ausgewählt wird und für dünnes Warmband mit einer Banddicke von 0,6 mm bis 6 mm und einer Bandlaufgeschwindigkeit größer als 1,5 m/s die zweite Trommelschere (5) ausgewählt wird, Kühlen des Warmbands in einer Kühlstrecke (3), Querteilen des gekühlten Warmbands mit der ersten oder zweiten Trommelschere, wobei eine erste Treiberrolleneinheit (6) und eine zweite Treiberrolleneinheit (7) an das Warmband angestellt werden und das Warmband beim Querteilen stabilisieren und Ausfördern des quergeteilten Warmbands durch eine Ausfördereinrichtung (8).

## Beschreibung

Die vorliegende Erfindung betrifft eine Vorrichtung und ein Verfahren zum Querteilen eines Warmbands, vorzugsweise aus Stahl.

Konkret betrifft die Erfindung eine Vorrichtung zum Querteilen eines Warmbands, umfassend eine Kühlstrecke zum Kühlen des Warmbands, zwei unterschiedliche Scheren zum Querteilen des Warmbands und eine nach den Scheren angeordnete Ausfördereinrichtung zum Ausfördern des quergeteilten Warmbands (z.B. eine Aufwickelvorrichtung für Bänder, ein Haspel, oder einen Auslaufbereich für Bandabschnitte).

Das Verfahren zum Querteilen eines Warmbands durch die Vorrichtung umfasst die Verfahrensschritte: Kühlen des Warmbands in einer Kühlstrecke, Querteilen des Warmbands und Ausfördern des quergeteilten Warmbands durch eine Ausfördereinrichtung. Dabei wird die Vorrichtung zur Durchführung des Verfahrens verwendet.

Zur Herstellung von Platten und gewickelten Band kann gemäß der WO 2006/106376 A1 eine erste Schere vor einer Kühlstrecke zum Schneiden von Platten und eine zweite Schere nach der Kühlstrecke zum Schneiden von Band verwendet werden. Die WO 2006/106376 A1 hat das Problem, dass die Schnittbereiche der beiden Scheren durch die Produkte vorgegeben werden. Die Schere für Platten schneidet den gesamten Dickenbereich, in dem Platten produziert werden und die Schere für Bänder schneidet den gesamten Dickenbereich, in dem Bänder produziert werden. Das bedeutet wiederum, dass die Schnittbereiche durch die zu schneidenden Produktpaletten von Platten bzw. von Bändern vorgegeben werden und nicht variiert werden können, ohne eine der Produktpaletten einzuschränken.

Weiters ist aus der JP58 122104 A eine Vorrichtung mit zwei identischen Scheren bekannt. Die beiden Scheren sind zum Durchführen von zwei zeitlich kurz aufeinanderfolgenden Schnitten zum Entfernen von Fehlstellen zwischen einem Bandfuß und einem nachfolgenden Bandkopf eines Warmbands notwendig, weil eine einzelne Schere nicht schnell genug zwei hintereinanderfolgende Schnitte des Warmbands durchführen kann. JP58 122104 A hat das Problem, dass durch diese Anforderung des gleichzeitigen Schneidens die Scheren jeweils den gesamten Dickenbereich schneiden können müssen, da sonst nicht Bandkopf und Bandfuß direkt aufeinanderfolgender gleich dicker Bänder geschnitten werden können.

Die Aufgabe der Erfindung ist es, eine Vorrichtung und ein Verfahren zu schaffen, das ein Querteilen von gekühltem Warmband mit unterschiedlicher Dicke und unterschiedlicher Bandlaufgeschwindigkeit unter Verringerung der Kräfte mit minimiertem Energieverbrauch ermöglicht, wobei das Warmband möglichst spät im Verarbeitungsprozess geteilt und dabei im Bereich der Scheren stabilisiert werden soll.

Diese Aufgabe wird durch eine gattungsgemäße Vorrichtung nach Anspruch 1 dadurch gelöst, dass die zwei unterschiedlichen Scheren nach der Kühlstrecke angeordnet sind und Trommelscheren sind, umfassend eine erste Trommelschere und eine zweite Trommelschere, und wobei die erste Trommelschere zum Querteilen von dickem Warmband mit Banddicken von 4 mm bis 28 mm, vorzugsweise von 6 mm bis 28 mm, mit Bandlaufgeschwindigkeiten kleiner als 2,25 m/s, vorzugsweise kleiner als 1,5 m/s, geeignet ist, und die zweite Trommelschere zum Querteilen von dünnem Warmband mit Banddicken von 0,6 mm bis 6 mm mit Bandlaufgeschwindigkeiten größer als 1,5 m/s geeignet ist, und dass vor der zweiten Trommelschere eine erste Treiberrolleneinheit und nach der zweiten Trommelschere eine zweite Treiberrolleneinheit angeordnet ist.

Unter Warmband im Sinne der Erfindung versteht man warmgewalztes Metallband, insbesondere Stahlband, mit einer Dicke von 0,6 mm bis 28 mm. Durch die Anordnung der beiden Scheren nach der Kühlstrecke ist die Kühlung unbeeinflusst vom Querteilprozess. Es entstehen keine zusätzlichen Bandköpfe, welche die Kühlstrecke beschädigen können. Die zwei unterschiedlichen Scheren sind als Trommelscheren ausgeführt, weil sich diese besonders gut für die angegebenen Dickenbereiche und Bandlaufgeschwindigkeiten eignen.
Aus den im folgenden Absatz beschriebenen Merkmalen und physikalischen Zusammenhängen ergeben sich energietechnische Vorteile. Die erste Trommelschere zum Querteilen von dickem Warmband mit Warmbanddicken von 4 mm bis 28 mm, vorzugsweise von 6 mm bis 28 mm, wird genau für diesen Querteilbereich dimensioniert. Dabei definiert die erste Banddickenobergrenze von 28 mm für die erste Trommelschere die maximalen Schnittkräfte der Trommelschere. Die Schnittkräfte, welche beim Querteilen von Warmband mit der Banddicke von 28 mm maximal auftreten können, definieren die Stabilitätsanforderung an die Schere und damit ihre Masse. Die erste Banddickenuntergrenze von 4 mm, vorzugsweise von 6 mm, definiert durch die zugeordnete maximale Bandlaufgeschwindigkeit von 2,25 m/s, vorzugsweise von 1,5 m/s, das Drehmoment, welches bei der Beschleunigung auftritt. Die Scherenmasse der rotierenden Scherenteile und die Masse der rotierenden Teile des Antriebsstrangs definieren mit der Geometrie der Anordnung das Massenträgheitsmoment der rotierenden Teile der Scherenanordnung und definieren gemeinsam mit der vom Prozess vorgegebenen Beschleunigungsdauer das Drehmoment. In Kombination mit der vom Prozess vorgegebenen Beschleunigungsdauer definiert das Drehmoment die zur Beschleunigung benötigte Rotationsenergie. Der Motor muss dabei stark genug ausgeführt sein, um die Beschleunigung der Trommeln der Trommelschere auf Querteilgeschwindigkeit in der gewünschten Zeit sicherzustellen, wobei die Querteilgeschwindigkeit die Umfanggeschwindigkeit der Trommeln der Trommelschere ist und gleich der Bandlaufgeschwindigkeit ist. Die Warmbanddicke von 4 mm bis 28 mm, vorzugsweise von 6 mm bis 28 mm, definiert dadurch die Motoren, die für den Betrieb der ersten Trommelschere geeignet sind. Diese Bandlaufgeschwindigkeit von 2,25 m/s, vorzugsweise von 1,5 m/s, ist im Vergleich zu Bandlaufgeschwindigkeiten von 7,5 m/s und mehr für dünne Bänder, wie sie aus WO 2006/106376 A1 bekannt sind, sehr klein. Daher kann aufgrund der kleineren Rotationsenergie für die erste Trommelschere im Vergleich zu der aus WO 2006/106376 A1 bekannten Schere für Warmband mit Warmbanddicken zwischen 0,14 mm und 20 mm und Bandlaufgeschwindigkeiten von beispielsweise 7,54 m/s, bei gleicher Beschleunigungsdauer ein kleinerer Motor für die erste Trommelschere verwendet werden, ohne einen negativen Einfluss auf Querteilprozess zu haben, was den Energieverbrauch der ersten Trommelschere beim Querteilen reduziert. Für die zweite Trommelschere ist der funktionelle Zusammenhang zwischen Banddickenobergrenze und Banddickenuntergrenze gleich zur oben beschriebenen ersten Trommelschere. Für die zweite Trommelschere zum Querteilen von Warmbanddicken von 0,6 mm bis 6 mm werden die Schnittkräfte beim Querteilen durch die zweite Banddickenobergrenze von 6 mm definiert. Die zweite Trommelschere querteilt allerdings bei wesentlich höheren Bandlaufgeschwindigkeiten von bis zu 20 m/s dünnes Warmband im Bereich der zweiten Banddickenuntergrenze von 0,6 mm. Durch die wesentlich kleinere Trommelschere für Warmbanddicken bis zur Banddickenobergrenze von 6 mm ist es daher möglich, basierend auf der resultierenden kleineren Scherenmasse und dem kleineren Massenträgheitsmoment für die zweite Trommelschere zum Querteilen von Warmbanddicken bis zu 6 mm kleinere Motoren zu verwenden, was den Energieverbrauch zum Beschleunigen der zweiten Trommelschere reduziert. Die zweite Banddickenobergrenze und die erste Banddickenuntergrenze sind dabei so gewählt, dass das Querteilen von Warmband über den gesamten Dickenbereich von 0,6 mm bis 28 mm sichergestellt ist. Dies geschieht durch einen Überlapp der Schnittdickenbereiche der beiden Trommelscheren für Banddicken von 4 bis 6 mm. Im Überlapp der Schnittdickenbereiche können beide Trommelscheren für das Querteilen ausgewählt werden, wobei allerdings nur eine der beiden Trommelscheren tatsächlich ausgewählt wird und das Band querteilt. Vorzugsweise gibt es keinen Überlapp und das Querteilen von Warmband über den gesamten Dickenbereich von 0,6 mm bis 28 mm ist durch direkt aneinander angrenzenden Dickenbereiche sichergestellt, wobei 6 mm dickes Warmband mit der ersten und der zweiten Trommelschere geschnitten werden kann.
Bei der zweiten Trommelschere sinkt die Belastung auf die Lagerung aufgrund der kleineren Scherenmasse und der kleineren Querteilkräfte. Daher kann die Lagerung kostengünstiger ausgeführt werden. Eine Einstellvorrichtung für einen Messerpalt ist bei den gewählten Schnittbereichen der Trommelscheren nicht erforderlich. Zur weiteren Verschleißoptimierung bei den Messern können die erste und die zweite Trommelschere einen Messerspalteinstelleinrichtung enthalten. Weiters besteht die Möglichkeit, dass das Warmband beim Querteilen mit der zweiten Trommelschere aufgrund der hohen Bandlaufgeschwindigkeiten und der geringen Bandsteifigkeit bei geringen Warmbanddicken durch Treiberrollen instabil wird. Die Vorrichtung umfasst daher Treiberrollen die das Warmband stabilisieren können und gegebenenfalls den Bandzug im Querteilbereich verringern können. Dadurch eignet sich die Vorrichtung zum Sicherstellen eines sicheren, störungsfreien Querteilens und ein sicherer, störungsfreier Bandlauf des dünnen Warmbands ist im Betrieb der Vorrichtung gewährleistet. Die Banddicke für die Scherenauswahl ist entweder durch die Vorbearbeitung in einer räumlich getrennten Anlage bekannt (Übergabe eines Dickenwertes des Warmbands als bekannter Materialparameter), oder wird durch eine Dickenbestimmung ermittelt wie beispielsweise: optische Dickenmessung, mechanische Dickenmessung, elektromagnetische Messung mittels Röntgenstrahlung oder Gammastrahlung, Stichabnahme im letzten Walzgerüst einer vorgelagerten Walzstraße, Stichplanrechnung einer vorgelagerten Walzstraße, Berechnung aus dem Massenfluss mithilfe von Bandeinlaufdicke vor dem ersten Walzgerüst in einer vorgelagerten Walzstraße, Bandeinlaufgeschwindigkeit vor dem ersten Walzgerüst und Bandauslaufgeschwindigkeit nach dem letzten Walzgerüst in einer vorgelagerten Walzstraße.

In besonders vorteilhafter Weise wird die Vorrichtung zum Querteilen so ausgeführt, dass die erste Trommelschere vor der zweiten Trommelschere angeordnet ist und eine dritte Treiberrolleneinheit vor der ersten Trommelschere angeordnet ist, oder dass die erste Trommelschere nach der zweiten Trommelschere angeordnet ist und die dritte Treiberrolleneinheit nach der ersten Trommelschere angeordnet ist.Durch diese vorteilhafte Ausgestaltung ist es möglich, das Warmband beim Querteilen mit der ersten Trommelschere oder mit der zweiten Trommelschere unabhängig von der Anordnung der ersten und der zweiten Trommelschere zu stabilisieren. Dabei wird das Warmband durch jeweils mindestens zwei der ersten, zweiten und dritten Treiberrolleneinheiten stabilisiert und ein Bandzug im Querteilbereich der querteilenden Trommelschere verringert.

In einer weiteren besonders vorteilhaften Weise wird die Vorrichtung zum Querteilen so ausgeführt, dass die erste Trommelschere und die zweite Trommelschere zwischen 4 und 10 m voneinander entfernt sind. Durch diese vorteilhafte Ausgestaltung ist zwischen der ersten und der zweiten Trommelschere ausreichend Platz für Wartungsarbeiten an der ersten und der zweiten Trommelschere und der zwischen den Trommelscheren angeordneten ersten oder zweiten Treiberrolleneinheit. Die horizontale Entfernung der Rotationsachse von den Trommeln der ersten Trommelschere zur Rotationsachse der Trommeln der zweiten Trommelschere beträgt 4 bis 10 m.

In einer weiteren besonders vorteilhaften Weise wird die Vorrichtung zum Querteilen so ausgeführt, dass die Ausfördereinrichtung 4 bis 10 m nach der, in Bandlaufrichtung betrachtet, zuletzt angeordneten Trommelschere angeordnet ist. Durch diese Entfernung von 4 bis 10 m ist ausreichend Platz für die Wartung der nach der, in Bandlaufrichtung betrachtet, zuletzt angeordneten Trommelschere und der danach angeordneten zweiten oder dritten Treiberrolleneinheit. Außerdem können in diesem Bereich optional weitere Module wie Messeinrichtungen oder Inspektionseinrichtungen (z.B. Temperaturmessung, Oberflächeninspektion, ...) angebracht werden. Die horizontale Entfernung von den Rotationsachsen der, in Bandlaufrichtung betrachtet, hinteren Trommelschere bis zum Bandeintrittsbereich der Ausfördereinrichtung beträgt 4 bis 10 m.

In einer weiteren besonders vorteilhaften Weise wird die Vorrichtung zum Querteilen so ausgeführt, dass die Kühlstrecke eine Warmbandverfolgungseinrichtung und eine Regeleinrichtung umfasst, die eine gezielte und unterschiedliche Warmbandkühlung von einzelnen Warmbandabschnitten beim Durchlaufen durch die Kühlstrecke ermöglicht. Diese Regeleinrichtung ermöglicht eine selektive Reduzierung der Kühlung eines Warmbandabschnitts mithilfe einer Nachverfolgungseinrichtung. Durch die reduzierte Kühlung bleibt ein Warmbandabschnitt heißer als die anderen Warmbandabschnitte. Nach der Kühlstrecke wird dann der heißere Warmbandabschnitt von der ersten oder zweiten Trommelschere quergeteilt. Dadurch wird die zum Querteilen benötigte Querteilkraft reduziert.

In einer weiteren besonders vorteilhaften Weise wird die Vorrichtung zum Querteilen so ausgeführt, dass die Vorrichtung zum Querteilen eine der Kühlstrecke vorgelagerte Warmwalzstraße zur Herstellung des Warmbands umfasst. Durch diese vorteilhafte Ausführung kann das in der Warmwalzstraße produzierte Warmband nach dem Walzen quergeteilt werden

In einer weiteren besonders vorteilhaften Weise wird die Vorrichtung zum Querteilen so ausgeführt, dass die Vorrichtung zum Querteilen in einer Gieß-Walz-Verbundanlage angeordnet ist und endloses Warmband querteilt. Diese vorteilhafte Anordnung ermöglicht das Produzieren von Warmband in einem Endlosprozess bis nach der Kühlstrecke. Dadurch wird der Energieverbrauch optimiert, die Warmbandqualität erhöht und die Störungsanfälligkeit verringert. Die Anzahl der Anlagenteile, die durch Bandkopf und Bandfuß nach dem Querteilen beschädigt werden kann, wird minimiert. Damit werden auch Beeinträchtigungen der Qualität des Warmbands aufgrund solcher Beschädigungen minimiert (z.B. ungleichmäßige Kühlung durch beschädigte Düsen oder Kühlbalken in der Kühlstrecke).

In einer weiteren besonders vorteilhaften Weise wird die Vorrichtung zum Querteilen so ausgeführt, dass in einem ersten Antriebsstrang der ersten Trommelschere und in einem zweiten Antriebsstrang der zweiten Trommelschere jeweils eine koppelbare Schwungmasse angeordnet ist, und mithilfe einer Kupplung in den jeweiligen Antriebsstrang eingekoppelt werden kann. Die koppelbare Schwungmasse ist ein zusätzliches rotierendes Massenelement, das in den Antriebsstrang eingekoppelt werden kann. Das zusätzliche rotierende Massenelement dient zum Speichern von Rotationsenergie für das Querteilen bei langsamen Bandlaufgeschwindigkeiten. Die Schwungmasse ist durch Antriebswellen und eine Kupplung kuppelbar mit dem Getriebe verbunden. Getriebe und Schwungmasse werden über eine Antriebswelle durch einen Motor angetrieben. Eine Antriebswelle überträgt die Energie auf die jeweilige erste oder zweite Trommelschere. Der ersten Trommelschere ist dabei ein erster Antriebsstrang zugeordnet, der ein Getriebe 1, eine Kupplung 1 und eine Schwungmasse 1 umfasst. Diese Bestandteile des ersten Antriebsstrangs sind durch Antriebswellen miteinander, mit der ersten Trommelschere und einem Motor 1 zum Antreiben des ersten Antriebsstrangs und der ersten Trommelschere verbunden. Der zweiten Trommelschere ist dabei ein zweiter Antriebsstrang zugeordnet, der ein Getriebe 2, eine Kupplung 2 und eine Schwungmasse 2 umfasst. Diese Bestandteile des zweiten Antriebsstrangs sind durch Antriebswellen miteinander, mit der ersten Trommelschere und einem Motor 2 zum Antreiben des ersten Antriebsstrangs und der ersten Trommelschere verbunden.

Die erfindungsgemäße Aufgabe wird durch ein gattungsgemäßes Verfahren nach Anspruch 9 dadurch gelöst, dass folgende Verfahrensschritte durchgeführt werden: Bestimmung einer Dicke des Warmbands; Auswählen einer ersten Trommelschere für ein dickes Warmband oder einer zweiten Trommelschere für ein dünnes Warmband aufgrund der Dicke des Warmbands, wobei für dickes Warmband mit einer Banddicke von 4 mm bis 28 mm, vorzugsweise von 6 mm bis 28 mm, und einer Bandlaufgeschwindigkeit kleiner als 2,25 m/s, vorzugsweise kleiner als 1,5 m/s, die erste Trommelschere ausgewählt wird und für dünnes Warmband mit einer Banddicke von 0,6 mm bis 6 mm und einer Bandlaufgeschwindigkeit größer als 1,5 m/s die zweite Trommelschere ausgewählt wird; Kühlen des Warmbands in einer Kühlstrecke; Querteilen des gekühlten Warmbands mit der ausgewählten ersten oder zweiten Trommelschere, wobei eine erste Treiberrolleneinheit vor der zweiten Trommelschere und eine zweite Treiberrolleneinheit nach der zweiten Trommelschere an das dünne Warmband angestellt werden und das dünne Warmband beim Querteilen stabilisieren; und Ausfördern des quergeteilten Warmbands durch eine Ausfördereinrichtung.

Durch das Querteilen mit einer der beiden Scheren nach der Kühlstrecke durchläuft das Warmband die Kühlstrecke ungeteilt und die Kühlung erfolgt unbeeinflusst vom Querteilprozess. Durch das Vermeiden zusätzlicher, durch Querteilen des Warmbands erzeugter Bandköpfe vor der Kühlstrecke wird das Risiko für eine Beschädigung der Kühlstrecke durch Bankdköpfe minimiert. Aufgrund einer Dickenbestimmung des Warmbands wird eine erste, nach der Kühlstrecke angeordnete Schere oder eine zweite, nach der Kühlstrecke angeordnete Schere ausgewählt und das gekühlte Warmband durch die ausgewählte Schere geteilt. Die zwei unterschiedlichen Scheren sind als Trommelscheren ausgeführt, weil sich diese besonders gut für die angegebenen Dickenbereiche und Bandlaufgeschwindigkeiten eignen. Die energietechnischen Vorteile des Verfahrens sind im Wesentlichen deckungsgleich mit den Vorteilen der Beschreibung der korrespondierenden Vorrichtung weiter oben. Weiters stabilisieren die erste Treiberrolleneinheit und die zweite Treiberrolleneinheit dünnes Warmband beim Querteilen mit der zweiten Trommelschere. Aufgrund der hohen Bandlaufgeschwindigkeiten und der geringen Bandsteifigkeit bei geringen Warmbanddicken ist die zusätzliche Stabilisierung durch Treiberrollen nötig. Dadurch wird ein sicheres, störungsfreies Querteilen und ein sicherer, störungsfreier Bandlauf des dünnen Warmbands gewährleistet. Die Dickenbestimmung erfolgt beispielsweise durch: Übergabe eines Dickenwertes eines Bandes als bekannter Materialparameter, optische Dickenmessung, mechanische Dickenmessung, elektromagnetische Messung mittels Röntgenstrahlung oder Gammastrahlung, Stichabnahme im letzten Walzgerüst einer vorgelagerten Walzstraße, Stichplanrechnung einer vorgelagerten Walzstraße, Berechnung aus dem Massenfluss mithilfe von Bandeinlaufdicke vor dem ersten Walzgerüst in einer vorgelagerten Walzstraße, Bandeinlaufgeschwindigkeit vor dem ersten Walzgerüst und Bandauslaufgeschwindigkeit nach dem letzten Walzgerüst in einer vorgelagerten Walzstraße.

In einer vorteilhaften Ausprägung des Verfahrens werden die erste Treiberrolleneinheit und die zweite Treiberrolleneinheit angestellt und im Querteilbereich einen Bandzug reduziert und das Warmband stabilisiert, und das gekühlte Warmband wird mit der zweiten Trommelschere bei reduziertem Zug quergeteilt. Durch die Reduktion des Bandzugs werden die Federkräfte des unter Zug stehenden Warmbands im Querteilbereich des Warmbands verringert. Dadurch wird eine unkontrollierte Beschleunigung des entstehenden neuen Bandkopfes und Bandfußes reduziert und speziell ein Auslenken des Bandkopfes aus der Bandlaufebene verhindert. Weiters werden Zugschwankungen vor- und nachgelagerten Anlagenteilen wie z.B. Kühlstrecke und Ausfördereinrichung bei dem instabileren dünnen Warmband reduziert und das Risiko von Bandbeschädigungen verringert.

In einer weiteren vorteilhaften Ausprägung des Verfahrens werden mindestens zwei Treiberrolleneinheiten aus der Gruppe, erste Treiberrolleneinheit, zweite Treiberrolleneinheit und dritte Treiberrolleneinheit, derart an das Warmband angestellt, dass eine ausgewählte Trommelschere, welche für dickes Warmband die erste Trommelschere ist und für dünnes Warmband die zweite Trommelschere ist, in einem Bereich zwischen den angestellten Treiberrolleneinheiten angeordnet ist, wobei die angestellten Treiberrolleneinheiten das Warmband stabilisieren und in dem Bereich zwischen den angestellten Treiberrolleneinheiten einen Bandzug reduzieren, und das gekühlte Warmband mit der ersten oder zweiten Trommelschere bei reduziertem Zug quergeteilt wird. In dieser vorteilhaften Ausprägung des Verfahrens wird im Querteilbereich der beiden Trommelscheren der Bandzug beim Querteilen reduziert oder optional zugfrei quergeteilt. Dies reduziert oder beseitigt die Zugschwankungen in den vor- und nachgelagerten Anlagenteilen und erhöht damit die Lebenserwartung dieser Anlagenteile und ermöglicht längere Wartungsintervalle.

In einer weiteren vorteilhaften Ausprägung des Verfahrens wird die Kühlstrecke für einen vorab bestimmten Warmbandabschnitt so angesteuert, dass eine Kühlung in dem Warmbandabschnitt reduziert wird und das Querteilen in dem Warmbandabschnitt erfolgt. Durch die Reduktion der Kühlung wird in diesem Warmbandabschnitt die Temperatur erhöht. Beim Querteilen des heißeren Warmbandabschnitts sinkt die benötigte Kraft und damit die Belastung der Trommelschere. Die Messer und die Lager der Trommelschere werden weniger belastet und dadurch werden Lebensdauer und Wartungsintervalle verlängert.

In einer weiteren vorteilhaften Ausprägung des Verfahrens wird die erste Trommelschere in einem Start-Stopp-Modus betrieben, wobei die Trommelschere für das Querteilen des dicken Warmbands ausgehend vom Stillstand der Trommelschere auf eine Querteilgeschwindigkeit beschleunigt wird und nach dem Querteilen des dicken Warmbands angehalten wird. Die erste Trommelschere permanent in Rotation zu halten würde permanent Energie verbrauchen. Dadurch, dass die maximale Geschwindigkeit der erste Trommelschere mit 1,5 m/s limitiert ist, ist eine Beschleunigung der ersten Trommelschere energietechnisch günstiger als die erste Trommelschere permanent zu rotieren. Die Energieeinsparung bei der im Start-Stopp-Modus betriebenen Schere wird durch eine überschüssige Energie definiert, die durch die Beschleunigung des Massenträgheitsmoments auf Querteilgeschwindigkeit in das rotierende System eingebracht wird. Diese überschüssige Energie nimmt mit abnehmender Warmbanddicke und der gleichzeitig zunehmenden Bandlaufgeschwindigkeit zu und ist durch die Rotationsenergie der Masse abzüglich der Energie, die zum Querteilen des Warmbands benötigt wird, definiert. Da die Energie die im Massenträgheitsmoment gespeichert wird, mit zunehmender Geschwindigkeit immer größer wird, aber die beim Querteilen benötigte Energie mit der Banddicke abnimmt, wächst die zum Abbremsen benötigte Bremsenergie, die gleich der überschüssigen Energie ist, überproportional. Es ist daher energietechnisch von Vorteil, eine möglichst kleine Scherenmasse auf eine hohe Geschwindigkeit zu beschleunigen und zu bremsen, bzw. eine große Scherenmasse auf weniger hohe Geschwindigkeit zu beschleunigen und zu bremsen.

In einer weiteren vorteilhaften Ausprägung des Verfahrens wird die zweite Trommelschere dauerhaft rotiert, wobei zum Querteilen zumindest eine obere Trommel oder eine untere Trommel in eine Querteilposition bewegt wird, dass ein Messer der oberen Trommel und ein Messer der unteren Trommel beim Querteilen überlappen und das Warmband querteilen. Durch die hohen Querteilgeschwindigkeiten der zweiten Trommelschere ist eine Beschleunigung der Trommelschere energietechnisch ungünstiger. Die Trommeln der zweiten Trommelschere werden daher dauerhaft rotiert. Die dauerhafte Rotation führt zu einem permanenten Energieverlust abhängig vom Massenträgheitsmoment. Für den Querteilprozess wird mindestens eine der beiden Trommeln der zweiten Trommelschere mittels eines Antriebs in eine Querteilposition bewegt, wobei die Bewegung der Trommel derart erfolgt, dass bei einer Umdrehung der Trommeln ein Überlapp der Messer der unteren und der oberen Trommelschere hergestellt wird, und dadurch das Warmband quergeteilt wird. Nach dem Querteilen werden die Trommeln der Trommelschere ausreichend schnell auseinanderbewegt, dass bei der dem Querteilprozess nachfolgenden Umdrehung der Trommeln das Warmband nicht beschädigt wird und nicht quergeteilt wird. Dieses Verschieben der mindestens einen Trommel kann beispielsweise durch einen Exzenter oder durch einen Linearantrieb erfolgen. Das Verschieben durch Exzenter oder Linearantrieb ist wiederum eine Beschleunigung der Schere mit Anschließenden Abbremsen. Für diese Beschleunigung und Abbremsung des Exzenters oder Linearantriebs resultiert die Energieeinsparung ebenfalls aus der Beschleunigung und darauffolgenden Abbremsung einer kleineren Scherenmasse auf eine hohe Geschwindigkeit oder aus der Beschleunigung einer großen Scherenmasse auf eine geringere Geschwindigkeit.

In einer weiteren vorteilhaften Ausprägung des Verfahrens wird das Warmband in einer vorgelagerten Warmwalzstraße gewalzt. Durch diese vorteilhafte Ausführung kann das in der Warmwalzstraße produzierte Warmband nach dem Walzen quergeteilt werden. Beispielsweise können Bandkopf und/oder Bandfuß eines Warmbands abgetrennt werden.

In einer weiteren vorteilhaften Ausprägung des Verfahrens wird das Warmband in einem Endlosbetrieb in einer Gieß-Walz-Verbundanlage produziert. Diese vorteilhafte Ausprägung des Verfahrens ermöglicht das Produzieren von Warmband in einem Endlosprozess, wobei das Warmband bis nach der Kühlstrecke als Endlosband vorhanden ist, und nach der Kühlstrecke quergeteilt wird. Dadurch wird der Energieverbrauch optimiert, die Warmbandqualität erhöht und die Störungsanfälligkeit verringert. Die Anzahl der Anlagenteile, die nach dem Querteilen durch den beim Querteilen erzeugten neuen Bandkopf und Bandfuß beschädigt werden kann, wird minimiert. Damit werden auch Beeinträchtigungen der Qualität des Warmbands (z.B. ungleichmäßige Kühlung durch beschädigte Düsen oder Kühlbalken in der Kühlstrecke) aufgrund von Beschädigungen oder Stillstandszeiten aufgrund von schwerwiegenden Störungen (z.B. Verkeilen des Bandkopfes in der Kühlstrecke) minimiert.

In einer weiteren vorteilhaften Ausprägung des Verfahrens wird die koppelbare Schwungmasse der ersten Trommelschere aus dem Antriebsstrang ausgekoppelt und nur beim Querteilen bei niedrigen Bandlaufgeschwindigkeiten von bis zu 1 m/s eingekoppelt, und die koppelbare Schwungmasse der zweiten Trommelschere ist permanent eingekoppelt. Die koppelbare Schwungmasse ist ein zusätzliches rotierendes Massenelement, das in den Antriebsstrang eingekoppelt werden kann. Das zusätzliche rotierende Massenelement dient zum Speichern von Rotationsenergie für das Querteilen bei langsamen Bandlaufgeschwindigkeiten von 0,05 m/s bis 1 m/s. Die Schwungmasse ist durch Antriebswellen und eine Kupplung kuppelbar mit dem Getriebe verbunden. Getriebe und Schwungmasse werden über eine Antriebswelle durch einen Motor angetrieben. Eine Antriebswelle überträgt die Energie auf die jeweilige erste oder zweite Trommelschere.

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die Folgendes zeigen:
Fig. 1 eine schematische Darstellung einer Scherenanordnung gemäß der Erfindung
Fig. 2 und 3 alternative Ausführungsformen der Scherenanordnung der Erfindung
Fig. 4a eine weitere Ausführungsform der Scherenanordnung
Fig. 4b eine schematische Darstellung der verschiebbaren Trommeln der zweiten Trommelschere mittels Linearantrieb
Fig. 4c eine schematische Darstellung der verschiebbaren Trommeln der zweiten Trommelschere mittels Exzenter Fig. 5 den Ablauf des erfindungsgemäßen Verfahrens
Fig. 6 eine Darstellung einer Scherenanordnung gemäß der Erfindung mit Haspel als Ausfördereinrichtung
Fig. 7 einer Scherenanordnung mit einzelnen Kühlbalken
Fig. 8a, 8b, und 8c die zeitliche Abfolge bei der geänderten Kühlung eines Warmbandabschnitts in der Kühlstrecke bestehend aus 3 Kühlbalken
Fig. 9a eine Seitenansicht einer Ausführungsform der Scherenanordnung
Fig. 9b eine Ansicht der von Ausführungsform von Fig. 9a von oben und die Antriebsstränge der beiden Trommelscheren.
Fig. 10 eine schematische Darstellung einer Scherenanordnung und das letzte Walzgerüst der vorgelagerten Warmwalzstraße oder Gieß-Walz-Verbundanlage.
Fig. 11a die Startposition einer Trommelschere mit fixer Rotationsachse
Fig. 11b die Trommeln einer Trommelschere in der Beschleunigungsphase
Fig. 11c die Trommeln einer Trommelschere mit überlappenden Messern beim Querteilen
Fig. 11d die Trommeln einer Trommelschere in der Abbremsphase
Fig. 11e die Trommeln einer Trommelschere in Endposition
Fig. 11f das Zurückbewegen der Trommeln von der Endposition in die Startposition

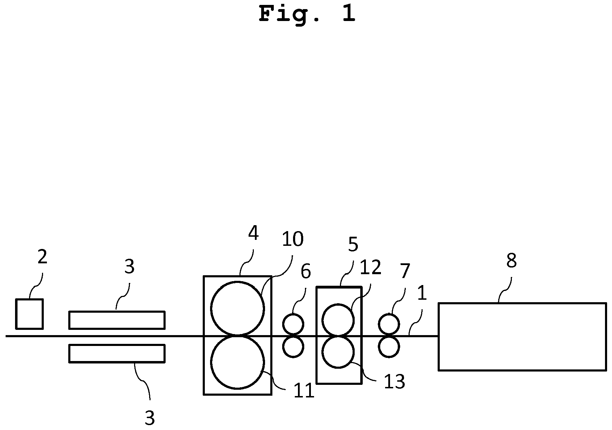

Fig. 1 zeigt eine Scherenanordnung. Die Dicke des einlaufenden Warmbands 1 wird durch eine Dickenbestimmung 2 ermittelt. Im Anschluss wird das ungeschnittene Warmband in einer Kühlstrecke 3 gekühlt. Nach der Kühlstrecke 3 wird das gekühlte Warmband durch eine erste Trommelschere 4 oder eine zweite Trommelschere 5 quergeteilt, wobei dickes Warmband mit Banddicken zwischen 4 und 28 mm, vorzugsweise von 6 mm bis 28 mm, mit Bandlaufgeschwindigkeiten kleiner als 2,25 m/s, vorzugsweise kleiner als 1,5 m/s, von der ersten Trommelschere 4 geteilt wird und dünnes Warmband mit Banddicken zwischen 0,6 und 6 mm mit Bandlaufgeschwindigkeiten größer als 1,5 m/s von der zweiten Trommelschere 5 geteilt wird. Im Fall des Querteilens mit der ersten Trommelschere 4 läuft das geteilte Warmband durch die inaktive zweite Trommelschere 5 in die Ausfördereinrichtung und wird dort ausgefördert. Im Fall des Querteilens mit der zweiten Trommelschere 5 läuft das gekühlte Warmband ungeteilt durch die inaktive erste Trommelschere 4. Das Warmband wird dabei durch die angestellte erste Treiberrolleneinheit 6 und die angestellte zweite Treiberrolleneinheit 7 stabilisiert und durch die zweite Trommelschere 5 quergeteilt. Nach dem Querteilen mit der ersten oder der zweiten Trommelschere wird das gekühlte und geteilte Warmband durch die Ausfördereinrichtung 8 ausgefördert.

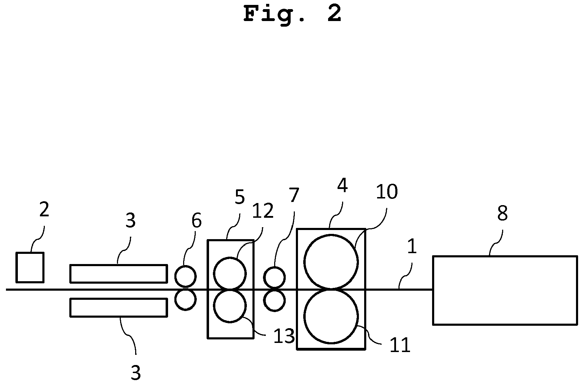

Bei der Scherenanordnung in Fig. 2 ist die erste Trommelschere 5 nach der zweiten Trommelschere 4 angeordnet. Dünnes Warmband wird durch die zweite Trommelschere 5 geteilt. Das geteilte dünne Warmband durchquert die inaktive erste Trommelschere 4 und wird nach der ersten Trommelschere 4 durch die Ausfördereinrichtung 8 ausgefördert. Dickes Warmband durchquert die zweite Trommelschere 5 ungeteilt und wird dann durch die erste Trommelschere 4 quergeteilt und danach von der Ausfördereinrichtung 8 ausgefördert.

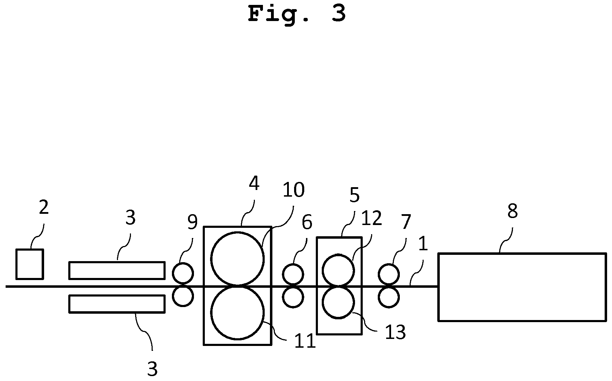

Fig. 3 zeigt die Scherenanordnung der Fig. 1 mit einer zusätzlichen, dritten Treiberrolleneinheit 9 vor der ersten Trommelschere 4. Durch die zusätzliche Treiberrolleneinheit kann beim Querteilen mit beiden Trommelscheren das Warmband stabilisiert werden und bei reduziertem Bandzug quergeteilt werden.

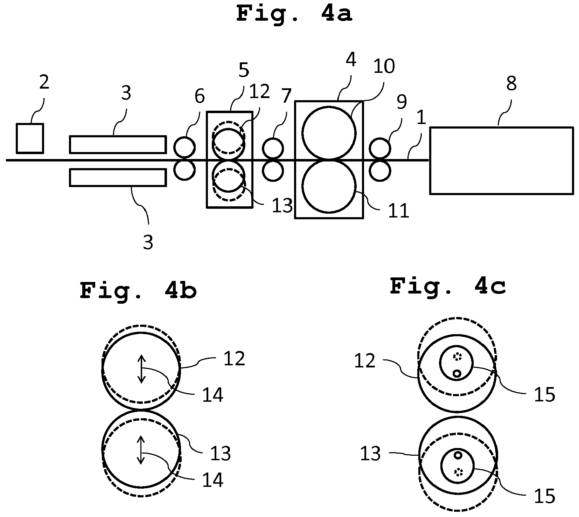

Fig. 4a zeigt die Scherenanordnung der Fig. 2 mit einer zusätzlichen, dritten Treiberrolleneinheit 9 nach der ersten Trommelschere 5. In Fig. 4b und 4c wird das Verschieben der Trommeln 10, 11, 12, 13 der beispielsweise der zweiten Trommelschere schematisch dargestellt. Fig. 4b zeigt exemplarisch die Verschiebebewegung der Trommeln mittels eines Linearantriebs 14 und Fig. 4c mithilfe eines Exzenters 15 in welchem die Rotationsachse der Trommel 10, 11, 12, 13 gelagert ist. Die durchgehenden Linien in Fig. 4b zeigen die Trommeln einer Trommelschere zum Zeitpunkt des Querteilens. Die strichlierten Linien in Fig. 4b zeigen die Trommeln 12, 13 , wenn das Warmband eine der Tommelscheren ungeschnitten durchläuft. Die Pfeile symbolisieren die Verschiebung der Rotationsachsen mit einem Linearantrieb 14. Die durchgehenden Linien in Fig. 4c zeigen die Trommeln 10, 11, 12, 13 und Rotationsachsen der Trommeln der Trommelschere zum Zeitpunkt des Querteilens. Die strichlierten Linien in Fig. 4c zeigen die Trommeln 10, 11, 12, 13 und Rotationsachsen der Trommeln, wenn das Warmband die Trommelschere ungeschnitten durchläuft.

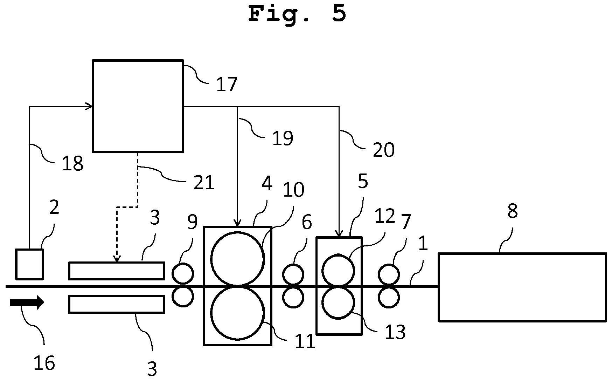

Fig. 5 zeigt eine schematische Darstellung des Querteilprozesses. Zuerst wird eine Banddicke des einlaufenden Warmbands ermittelt 2. Die ermittelte Banddicke des Warmbands wird an eine Steuereinrichtung oder Regeleinrichtung 15 übermittelt 16. Diese Steuereinrichtung oder Regeleinrichtung 15 wählt eine Trommelschere durch Übermitteln eines Steuersignals 19, 20 aus, welche dann zeitgerecht beschleunigt wird, um das Warmband 1 an der gewünschten Stelle querzuteilen. Die Beschleunigung von Trommelscheren, kann dabei durch zwei alternative Prozesse verfolgen. Im ersten Prozess werden der stillstehende Motor, Antriebsstrang und die ausgewählte Trommelschere direkt beschleunigt die Rotationsachse der Trommeln ist an einer fixen Position. Die Messer der Trommelschere müssen binnen einer Dreiviertel-Umdrehung auf Querteilgeschwindigkeit beschleunigt werden und nach dem Querteilen binnen einer Dreiviertel-Umdrehung gestoppt werden. Nach dem Stoppen der Trommeln werden die Trommeln der Trommelschere durch Umkehren der Drehrichtung wieder in Startposition bewegt. Im zweiten Prozess wird ein Exzenter 15 oder Linearantrieb der ausgewählten Trommelschere beschleunigt und eine der rotierenden Trommeln zur zweiten rotierenden Trommel in Schnittposition bewegt, oder beide rotierenden Trommeln aufeinander zu in Schnittposition bewegt. Das Warmband 1 wird in der Kühlstrecke 3 gekühlt, wobei optional die Kühlung aufgrund der ermittelten Banddicke für Warmbandabschnitte oder das gesamte Warmband 1 angepasst werden kann.
Der weitere Querteilprozessablauf bei Auswahl der ersten Trommelschere 4 ist folgender: Nach dem Verlassen der Kühlstrecke wird das dicke Warmband 1 durch die erste Trommelschere 4 quergeteilt. In Bandlaufrichtung 16 gesehen hinter der ersten Trommelschere 4 kann das Warmband optional durch die angestellte erste Treiberrolleneinheit 6, die angestellte zweite Treiberrolleneinheit 7 und die optionale dritte Treiberrolleneinheit 9 stabilisiert werden. Weiters kann optional zusätzlich der Bandzug zwischen den angestellten Treiberrolleneinheiten reduziert werden, indem das Warmband 1 durch die dritte Treiberrolleneinheit 9 vor der ersten Trommelschere beschleunigt wird, und durch die erst Treiberrolleneinheit 6 oder die zweite Treiberrolleneinheit 7 hinter der ersten Trommelschere 4 gebremst wird, wodurch der Bandzug im Bereich zwischen den zur Bremsung und Beschleunigung verwendeten Treiberrolleneinheiten verringert wird. Das gekühlte und durch die Treiberrollen stabilisierte Warmband wird dann an der gewünschten Stelle durch ein zeitgerechtes Starten des Querteilprozesses mit der ersten Trommelschere 4 quergeteilt. Danach wird das geteilte dicke Warmband durch die inaktive, zweite Trommelschere 5 geführt und von der nachfolgenden Ausfördereinrichtung ausgefördert.
Der weitere Querteilprozessablauf bei Auswahl der zweiten Trommelschere 5 ist folgender: Nach dem Verlassen der Kühlstrecke durchläuft das ungeteilte dünne Warmband die inaktive erste Trommelschere 4. In Bandlaufrichtung 16 gesehen hinter der ersten Trommelschere 4 wird es durch die angestellte erste Treiberrolleneinheit 6 und die angestellte zweite Treiberrolleneinheit 7 stabilisiert. Optional kann zusätzlich der Bandzug zwischen den angestellten Treiberrolleneinheiten reduziert werden indem das Warmband 1 durch die erste Treiberrolleneinheit 6 oder die dritte Treiberrolleneinheit 9 vor der zweiten Trommelschere 5 beschleunigt wird und durch die zweite Treiberrolleneinheit 7 hinter der zweiten Trommelschere 5 gebremst wird, wodurch der Bandzug zwischen im Bereich zwischen den zur Bremsung und Beschleunigung verwendeten Treiberrolleneinheiten verringert wird. Das gekühlte und durch die Treiberrollen stabilisierte Warmband wird dann an der gewünschten Stelle durch ein zeitgerechtes Starten des Querteilprozesses mit der zweiten Trommelschere 5 quergeteilt und von der nachfolgenden Ausfördereinrichtung 8 ausgefördert.

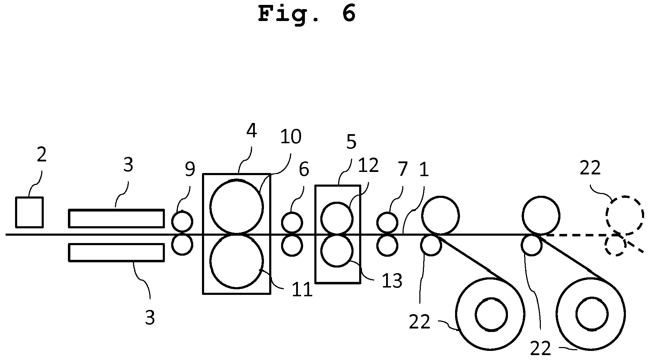

Fig. 6 zeigt exemplarisch eine schematische Scherenanordnung wie in Fig. 4, wobei die Ausfördereinrichtung 8 aus zwei oder mehr Haspel 22 besteht. Das Warmband wird nach dem Querteilen von einem der nachfolgenden Haspel 22 aufgewickelt, wobei ein Haspel den Bandfuß aufwickelt, und ein zweiter Haspel den direkt nachfolgenden Bandkopf anwickelt. Nachdem der Bandfuß fertig aufgewickelt ist, wird der Bund vom Haspel 22 abgezogen und der Haspel 22 für das Anwickeln des nächsten Bandkopfes vorbereitet. Weitere Haspel 22 dienen als Ersatzhaspel bei Störungen und Wartungsarbeiten.

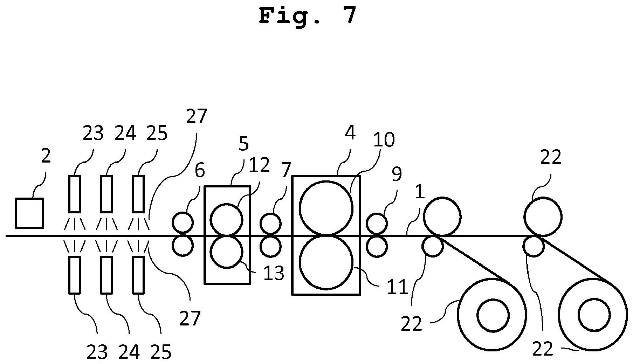

Fig. 7 zeigt eine ähnliche schematische Scherenanordnung wie Fig. 6. Im Vergleich zu Fig. 6 ist die Scherenreihenfolge der Trommelscheren vertauscht, das heißt, dass dünnes Warmband wie beispielsweise in Fig. 2 vor der ersten Trommelschere 4 von der zweiten Trommelschere 5 quergeteilt wird und dickes Warmband ungeschnitten durch die zweite Trommelschere 5 zur ersten Trommelschere 4 läuft. Die Kühlbalken der Kühlstrecke 3 sind exemplarisch durch drei Kühlbalken 23, 24, 25 dargestellt. Es können allerdings auch mehr als drei Kühlbalken zur Kühlung verwendet werden.

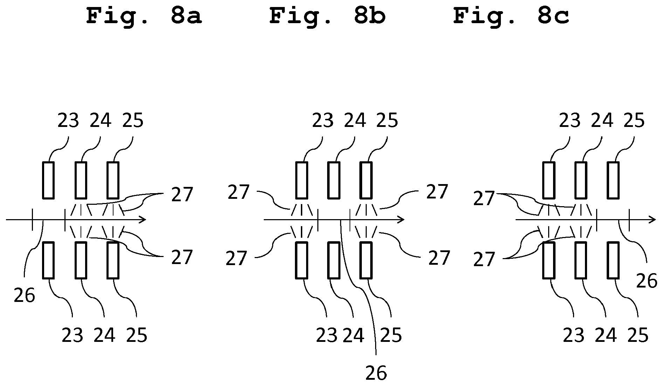

Fig. 8a, Fig. 8b und Fig. 8c zeigen den zeitlichen Verlauf der Schaltung der Kühlzonen um einen Warmbandabschnitt speziell zu kühlen. In Fig. 8a befindet sich der Warmbandabschnitt 26 unter dem ersten Kühlbalken 23. Dieser ist in dem Zeitraum in dem sich der Warmbandabschnitt 26 unter dem Kühlbalken befindet deaktiviert. Alle anderen Warmbandabschnitte werden normal gekühlt. Nachdem der Warmbandabschnitt 26 den Bereich des ersten Kühlbalkens 23 verlassen hat, wird der Kühlbalken wieder eingeschaltet. Dies ist in Fig. 8b zu sehen. Der erste Kühlbalken 23 ist wieder eingeschaltet. Der zweite Kühlbalken 24 ist nun deaktiviert, weil sich der Warmbandabschnitt nun unter dem zweiten Kühlbalken 24 befindet. Sobald der Warmbandabschnitt 26 den Bereich des zweiten Kühlbalkens 24 verlassen hat, wird der zweite Kühlbalken 24 wieder aktiviert. Der Warmbandabschnitt befindet sich nun unter dem dritten Kühlbalken 25 (Fig. 8c) der Kühlstraße. Dies wird für alle Kühlbalken oder eine gewünschte Anzahl der Kühlbalken einer Anlage wiederholt, bis die gewünschte Temperaturabweichung im Warmbandabschnitt 26 erzielt wird. Es ist ebenfalls eine Reduktion der Kühlung möglich. Die Abschaltung wurde als Beispiel zur Veranschaulichung des Prinzips gewählt. Wenn der Warmbandabschnitt 26 größer gewählt wird können auch mehrere nebeneinanderliegende Kühlbalken gleichzeitig deaktiviert sein.

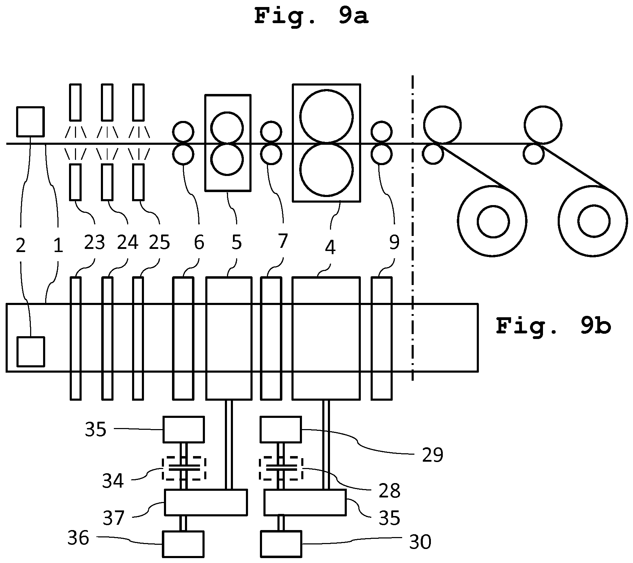

Fig. 9. zeigt die Aggregate der Scherenanordnung in einer Seitenansicht und einer Ansicht von oben. Die Ansicht von oben enthält eine Darstellung der Antriebsstränge der ersten und der zweiten Trommelschere. Der ersten Trommelschere 4 ist dabei ein erster Antriebsstrang zugeordnet, der ein Getriebe 1 33, eine Kupplung 1 28 und eine Schwungmasse 1 29 umfasst. Diese Bestandteile des ersten Antriebsstrangs sind durch Antriebswellen miteinander, mit der ersten Trommelschere und einem Motor 1 30 zum Antreiben des ersten Antriebsstrangs und der ersten Trommelschere 4 verbunden. Der zweiten Trommelschere 5 ist dabei ein zweiter Antriebsstrang zugeordnet, der ein Getriebe 2 37, eine Kupplung 2 34 und eine Schwungmasse 2 35 umfasst. Diese Bestandteile des zweiten Antriebsstrangs sind durch Antriebswellen miteinander, mit der zweiten Trommelschere 4 und einem Motor 2 36 zum Antreiben des ersten Antriebsstrangs und der ersten Trommelschere 4 verbunden. Jede der beiden Trommelscheren ist mit einer Antriebswelle zum zugehörigen Getriebe 33, 37 verbunden. Die Getriebe 33, 37 wiederum sind durch eine weitere Antriebswelle mit dem jeweiligen Motor 30, 36 verbunden. Zusätzlich führt noch eine weitere Antriebswelle vom jeweiligen Getriebe 33, 37 über eine jeweilige Kupplung 28, 34 zu einer jeweiligen Schwungmasse 29, 35. Diese Schwungmasse 29, 35 kann durch die Kupplung 28, 34 optional in den Antriebsstrang eingekoppelt werden und dient zum Speichern von Rotationsenergie für das Querteilen.

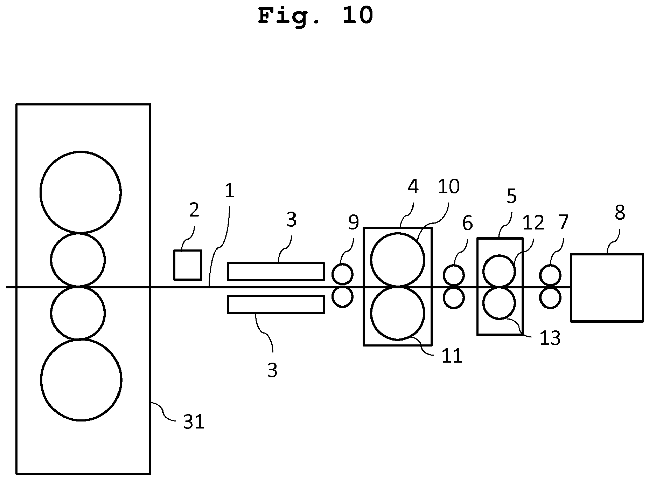

Fig. 10. zeigt das letzte Walzgerüst 31 einer der Scherenanordnung vorgelagerten Warmwalzanlage oder einer Gieß-Walz-Verbundanlage. In der Anlage wird Warmband 1 produziert, das mit der nachgereihten Scherenanordnung gekühlt, quergeteilt und ausgefördert wird.

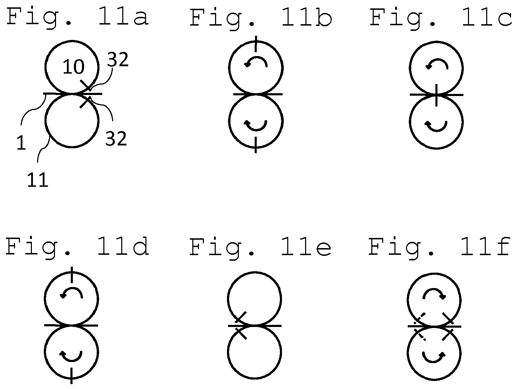

Fig. 11a bis Fig. 11f zeigen den Verlauf des Schneideprozesses bei beispielsweise der ersten Trommelschere 4 mit ortsfesten Rotationsachsen der beiden Trommeln 10, 11 der Trommelschere.
Fig. 11a zeigt die Trommeln 10, 11 der Trommelschere in der Startposition. Die Trommeln 10, 11 der Trommelschere stehen still. Die Messer 32 in Ruheposition berühren das Warmband 1 nicht.

Fig. 11b zeigt die Trommeln 10, 11 in der Beschleunigungsphase, die Trommeln 10, 11 werden beschleunigt. Die Drehrichtung der Trommeln 10, 11 beschleunigt die Messer 32 die sich aus der Startposition betrachtet vom Band 1 wegbewegen.
Fig. 11c zeigt die Trommeln 10, 11, die sich im Vergleich zu Fig. 11b um 180° in der angegebenen Drehrichtung weiterbewegt haben. Die Messer der Trommeln 10, 11 überlappen und das Band wird quergeteilt.
Fig. 11d zeigt die Trommeln 10, 11 nach einer weiteren Drehung um 180°. In dieser Figur wird die Trommel gebremst. Die Bremsung beginnt nach dem abgeschlossenen Querteilen und ist bei Erreichen der in Fig. 11e dargestellten Endposition abgeschlossen. Es ist wichtig, dass die Messer 32 das Warmband 1 nicht berühren, da dies zu Beschädigungen des Warmbands 1 führen würde.
Fig. 11f zeigt strichliert die Trommeln 10, 11 der Trommelschere in Endposition. Die Drehrichtung 24 wird umgekehrt und die Trommelschere solange gedreht, bis die Messer in Startposition sind. In dieser Position verweilen die Trommeln 10, 11 bis zum Start des nächsten Querteilvorgangs.

### Bezugszeichenliste

- 1: Warmband
- 2: Dickenbestimmung
- 3: Kühlstrecke
- 4: Erste Trommelschere
- 5: Zweite Trommelschere
- 6: Erste Treiberrolleneinheit
- 7: Zweite Treiberrolleneinheit
- 8: Ausfördereinrichtung
- 9: Dritte Treiberrolleneinheit
- 10: Obere Trommel erste Trommelschere
- 11: Untere Trommel erste Trommelschere
- 12: Obere Trommel zweite Trommelschere
- 13: Untere Trommel zweite Trommelschere
- 14: Verschiebung mit Linearantrieb
- 15: Exzenter
- 16: Bandlaufrichtung
- 17: Bandverfolgungseinrichtung und Steuereinrichtung oder Regeleinrichtung
- 18: Signal Dickenbestimmung
- 19: Steuersignal erste Schere
- 20: Steuersignal zweite Schere
- 21: Optionales Steuersignal oder Regelsignal für Kühlstrecke
- 22: Haspel mit zugehöriger Treiberrolleneinheit
- 23: Erster Kühlbalken
- 24: Zweiter Kühlbalken
- 25: Dritter Kühlbalken
- 26: Bandabschnitt
- 27: Kühlwasser
- 28: Kupplung 1
- 29: Schwungmasse 1
- 30: Motor 1
- 31: Walzgerüst einer Warmwalzsstraße oder einer GießWalz-Verbundanlage
- 32: Messer
- 33: Getriebe 1
- 34: Kupplung 2
- 35: Schwungmasse 2
- 36: Motor 2
- 37: Getriebe 2

## Patentansprüche

1. Vorrichtung zum Querteilen eines Warmbands umfassend:
- eine Kühlstrecke (3) zum Kühlen des Warmbands (1),
- zwei unterschiedliche Scheren zum Querteilen des Warmbands, und
- eine nach den Scheren angeordnete Ausfördereinrichtung (8) zum Ausfördern des quergeteilten Warmbands,
**dadurch gekennzeichnet,**
- **dass** die zwei unterschiedlichen Scheren nach der Kühlstrecke angeordnet sind und Trommelscheren sind, umfassend eine erste Trommelschere (4) und eine zweite Trommelschere (5),
- wobei die erste Trommelschere (4) zum Querteilen von dickem Warmband mit Banddicken von 4 mm bis 28 mm, vorzugsweise von 6 mm bis 28 mm, mit Bandlaufgeschwindigkeiten kleiner als 2,25 m/s, vorzugsweise kleiner als 1,5 m/s, geeignet ist, und die zweite Trommelschere (5) zum Querteilen von dünnem Warmband mit Banddicken von 0,6 mm bis 6 mm mit Bandlaufgeschwindigkeiten größer als 1,5 m/s geeignet ist, und
- **dass** vor der zweiten Trommelschere (5) eine erste Treiberrolleneinheit (6) und nach der zweiten Trommelschere eine zweite Treiberrolleneinheit (7) angeordnet ist.

2. Vorrichtung nach Anspruch 1, **dadurch gekennzeichnet,**
- **dass** die erste Trommelschere (4) vor der zweiten Trommelschere (5) angeordnet ist und eine dritte Treiberrolleneinheit (9) vor der ersten Trommelschere (4) angeordnet ist, oder
- **dass** die erste Trommelschere (4) nach der zweiten Trommelschere (5) angeordnet ist und die dritte Treiberrolleneinheit (9) nach der ersten Trommelschere (4) angeordnet ist.

3. Vorrichtung nach einem der vorherigen Ansprüche,
**dadurch gekennzeichnet,**
- **dass** die erste Trommelschere (4) und die zweite Trommelschere (5) zwischen 4 und 10 m voneinander entfernt sind.

4. Vorrichtung nach einem der vorherigen Ansprüche,
**dadurch gekennzeichnet,**
- **dass** die Ausfördereinrichtung (8) 4 bis 10 m nach der, in Bandlaufrichtung (16) betrachtet, zuletzt angeordneten Trommelschere angeordnet ist.

5. Vorrichtung nach einem der vorherigen Ansprüche,
**dadurch gekennzeichnet,**
- **dass** die Kühlstrecke (3) eine Warmbandverfolgungseinrichtung und eine Regeleinrichtung (17) umfasst, die eine gezielte und unterschiedliche Warmbandkühlung von einzelnen Warmbandabschnitten (26) beim Durchlaufen durch die Kühlstrecke (3) ermöglicht.

6. Vorrichtung nach einem der vorherigen Ansprüche,
**dadurch gekennzeichnet,**
- **dass** die Vorrichtung zum Querteilen eine der Kühlstrecke (3) vorgelagerte Warmwalzstraße (31) zur Herstellung des Warmbands umfasst.

7. Vorrichtung nach einem der vorherigen Ansprüche,
**dadurch gekennzeichnet,**
- **dass** die Vorrichtung zum Querteilen in einer Gieß-Walz-Verbundanlage (31) angeordnet ist und endloses Warmband querteilt.

8. Vorrichtung nach einem der vorherigen Ansprüche,
**dadurch gekennzeichnet,**
- **dass** in einem ersten Antriebsstrang der ersten Trommelschere (4) und in einem zweiten Antriebsstrang der zweiten Trommelschere (5) jeweils eine koppelbare Schwungmasse (29), (35) angeordnet ist und die jeweilige Schwungmasse mithilfe einer Kupplung (28), (34) in den jeweiligen Antriebsstrang eingekoppelt werden kann.

9. Verfahren zum Querteilen eines Warmbands durch eine Vorrichtung nach einem der vorhergehenden Ansprüche, umfassend die Verfahrensschritte:
- Bestimmung einer Dicke (2) des Warmbands (1);
- Auswählen einer ersten Trommelschere (4) für ein dickes Warmband oder einer zweiten Trommelschere (5) für ein dünnes Warmband aufgrund der Dicke des Warmbands,
- wobei für dickes Warmband mit einer Banddicke von 4 mm bis 28 mm, vorzugsweise von 6 mm bis 28 mm, und einer Bandlaufgeschwindigkeit kleiner als 2,25 m/s, vorzugsweise kleiner als 1,5 m/s, die erste Trommelschere (4) ausgewählt wird und für dünnes Warmband mit einer Banddicke von 0,6 mm bis 6 mm und einer Bandlaufgeschwindigkeit größer als 1,5 m/s die zweite Trommelschere (5) ausgewählt wird;
- Kühlen des Warmbands in einer Kühlstrecke (3);
- Querteilen des gekühlten Warmbands mit der ausgewählten ersten oder zweiten Trommelschere, wobei eine erste Treiberrolleneinheit (6) vor der zweiten Trommelschere (5) und eine zweite Treiberrolleneinheit (7) nach der zweiten Trommelschere an das dünne Warmband angestellt werden und das dünne Warmband beim Querteilen stabilisieren; und
- Ausfördern des quergeteilten Warmbands durch eine Ausfördereinrichtung (8).

10. Verfahren nach Anspruch 9, **dadurch gekennzeichnet,**
- **dass** die erste Treiberrolleneinheit (6) und die zweite Treiberrolleneinheit (7) angestellt werden und in einem Bereich zwischen den Treiberrolleneinheiten einen Bandzug reduzieren und das Warmband (1) stabilisieren
- und das gekühlte Warmband mit der zweiten Trommelschere (5) bei reduziertem Zug quergeteilt wird.

11. Verfahren nach den Ansprüchen 9 und 10, **dadurch gekennzeichnet,**
- **dass** mindestens zwei Treiberrolleneinheiten aus der Gruppe, erste Treiberrolleneinheit (6), zweite Treiberrolleneinheit (7) und dritte Treiberrolleneinheit (9), derart an das Warmband (1) angestellt werden, dass eine ausgewählte Trommelschere, welche für dickes Warmband die erste Trommelschere (4) ist und für dünnes Warmband die zweite Trommelschere (5) ist, in einem Bereich zwischen den angestellten Treiberrolleneinheiten angeordnet ist, wobei die angestellten Treiberrolleneinheiten das Warmband (1) stabilisieren und in dem Bereich zwischen den angestellten Treiberrolleneinheiten einen Bandzug reduzieren,
- und das gekühlte Warmband mit der ausgewählten ersten oder zweiten Trommelschere bei reduziertem Zug quergeteilt wird.

12. Verfahren nach den Ansprüchen 9 bis 11, **dadurch gekennzeichnet,**
- **dass** die Kühlstrecke (3) für einen vorab bestimmten Warmbandabschnitt (26) so angesteuert wird, dass eine Kühlung in dem Warmbandabschnitt (26) reduziert wird und das Querteilen in dem Warmbandabschnitt (26) erfolgt.

13. Verfahren nach den Ansprüchen 9 bis 12, **dadurch gekennzeichnet,**
- **dass** die erste Trommelschere (4) in einem Start-Stopp-Modus betrieben wird, wobei die Trommelschere für das Querteilen des dicken Warmbands ausgehend vom Stillstand der Trommelschere auf eine Querteilgeschwindigkeit beschleunigt wird
- und nach dem Querteilen des dicken Warmbands angehalten wird.

14. Verfahren nach den Ansprüchen 9 bis 13, **dadurch gekennzeichnet,**
- **dass** die zweite Trommelschere dauerhaft rotiert, wobei zum Querteilen zumindest eine obere Trommel oder eine untere Trommel in eine Querteilposition bewegt wird, dass ein Messer der oberen Trommel und ein Messer der unteren Trommel beim Querteilen überlappen und das Warmband querteilen.

15. Verfahren nach den Ansprüchen 9 bis 14, **dadurch gekennzeichnet,**
- **dass** das Warmband in einer vorgelagerten Warmwalzstraße gewalzt wird.

16. Verfahren nach den Ansprüchen 9 bis 15, **dadurch gekennzeichnet,**
- **dass** das Warmband in einem Endlosbetrieb in einer Gieß-Walz-Verbundanlage produziert wird.

17. Verfahren nach den Ansprüchen 9 bis 15, **dadurch gekennzeichnet,**
- **dass** die koppelbare Schwungmasse der ersten Trommelschere aus dem Antriebsstrang ausgekoppelt ist und nur für das Querteilen bei niedrigen Bandlaufgeschwindigkeiten von bis zu 1 m/s eingekoppelt wird, und
- die koppelbare Schwungmasse der zweiten Trommelschere permanent eingekoppelt ist.
